# EUROPÄISCHE PATENTSCHRIFT

(11) **EP 3 025 128 B1**
(45) Veröffentlichungstag und Bekanntmachung des Hinweises auf die Patenterteilung: **25.09.2019**
(21) Anmeldenummer: 14732511.2
(22) Anmeldetag: 02.06.2014
(51) Int. Cl.: G01F 23/284, G01F 23/296

(54) **VERFAHREN ZUR ERMITTLUNG UND ÜBERWACHUNG DES FÜLLSTANDS EINES MEDIUMS IN EINEM BEHÄLTER NACH EINEM LAUFZEITMESSVERFAHREN**
METHOD FOR DETERMINING AND MONITORING THE LEVEL OF A MEDIUM IN A CONTAINER ACCORDING TO A TRANSIT TIME MEASUREMENT METHOD
PROCÉDÉ POUR DÉTERMINER ET SURVEILLER LE NIVEAU D'UN FLUIDE DANS UN RÉCIPIENT SELON UN PROCÉDÉ DE MESURE DU TEMPS DE PROPAGATION

(30) Priorität: 23.07.2013 DE 102013107847
(43) Veröffentlichungstag der Anmeldung: 01.06.2016
(73) Patentinhaber: Endress+Hauser SE+Co. KG, 79689 Maulburg (DE)
(72) Erfinder: GORENFLO, Stefan, 79688 Hausen (DE); MARKONI, Steffen, 79618 Rheinfelden (DE); MONSE, Benjamin, 79206 Breisach (DE)
(74) Vertreter: Andres, Angelika Maria
(86) Internationale Anmeldenummer: PCT/EP2014/061372
(87) Internationale Veröffentlichungsnummer: WO 2015/010814

(56) Entgegenhaltungen:
- EP-A1- 2 093 546
- EP-A1- 2 226 615
- DE-A1-102006 019 191
- DE-A1-102009 001 010

## Beschreibung

Die vorliegende Erfindung betrifft ein Verfahren zur Ermittlung und Überwachung des Füllstands eines Mediums in einem Behälter nach einem Laufzeitmessverfahren gemäß dem Anspruch 1.

Entsprechende Verfahren zur Ermittlung und Überwachung des Füllstandes in einem Behälter werden häufig in den Messgeräten der Automations- und Prozesssteuerungstechnik eingesetzt. Von der Anmelderin werden beispielsweise solche Füllstandsmessgeräte unter dem Namen Prosonic, Levelflex und Micropilot produziert und vertrieben, welche nach dem Laufzeit-Messverfahren arbeiten und dazu dienen, einen Füllstand eines Mediums in einem Behälter zu bestimmen und/oder zu überwachen. Diese Füllstandsmessgeräte senden ein periodisches Sendesignal im Mikrowellen- oder Ultraschalbereich mittels eines Sende-/Empfangselementes in Richtung Oberfläche eines Füllguts und empfangen die reflektierten Echosignale nach einer abstandsabhängigen Laufzeit. Handelsübliche mit Mikrowellen arbeitende Füllstandsmessgeräte lassen sich grundlegend in zwei Klassen einteilen; eine erste Klasse, bei der die Mikrowellen mittels einer Antenne in Richtung des Füllguts gesendet, an der Füllgutoberfläche reflektiert und anschließend nach einer abstandsabhängigen Laufzeit wieder empfangen werden und eine zweite Klasse, bei der die Mikrowellen entlang eines Wellenleiters in Richtung des Füllguts geführt werden, an der Füllgutoberfläche aufgrund des dort bestehenden Impedanzsprunges reflektiert werden und die reflektierten Wellen entlang des Wellenleiter wieder zurück geleitet werden.

Aus den empfangenen Echosignalen wird in der Regel eine die Echoamplituden als Funktion der Laufzeit darstellende Echofunktion gebildet, wobei jeder Wert dieser Echofunktion der Amplitude eines in einem bestimmten Abstand vom Sendeelement reflektierten Echos entspricht.

In dieser ermittelten Echofunktion wird ein Nutzecho bestimmt, das der Reflexion des Sendesignals an der Füllgutoberfläche entspricht. Aus der Laufzeit des Nutzechos ergibt sich bei einer bekannten Ausbreitungsgeschwindigkeit der Sendesignale unmittelbar der Abstand zwischen der Füllgutoberfläche und dem Sendeelement.

Um die Echokurvenauswertung zu vereinfachen werden nicht die empfangen Rohsignal der Impulsfolgen verwendet, sondern es wird die Einhüllende, die so genannte Hüllkurve, ermittelt. Die Hüllkurve wird beispielsweise dadurch gewonnen, dass das Rohsignal der Impulsfolgen gleichgerichtet und anschließend über einen Tiefpass gefiltert wird.

Es gibt eine Vielzahl verschiedener Verfahren zur Bestimmung des Nutzechos in einer Hüllkurve, die sich in zwei grundlegend Methoden einteilen lassen. Entweder die statischen Ermittlungsmethoden mit statischen Echosuchalgorithmen und oder die dynamischen Ermittlungsmethoden mit dynamischen Echosuchalgorithmen.

Gemäß einem ersten Verfahren nach einer statischen Echosuchmethode wird durch einen statischen Echosuchalgorithmus das Nutzecho, das eine größere Amplitude als die übrigen Echos aufweist, ausgewählt. Es wird somit das Echo in der Hüllkurve mit der größten Amplitude als Nutzecho ermittelt.

Gemäß einem zweiten Verfahren nach einer statischen Echosuchmethode wird durch einen statischen Echosuchalgorithmus angenommen, dass das Nutzecho das nach dem Sendeimpuls das erste eintreffende Echo in der Hüllkurve ist. Es wird somit das erste Echo in der Hüllkurve als Nutzecho ausgewählt.

Es ist möglich, beide Verfahren in einem statischen Echosuchalgorithmus miteinander zu kombinieren, indem z.B. ein so genannter Erstechofaktor definiert wird. Der Erstechofaktor ist ein vorgegebener Faktor, um den ein Echo eine bestimmte Amplitude übersteigen muss, um als Nutzecho erkannt zu werden. Alternativ kann eine laufzeitabhängige Echoschwelle definiert werden, die ein Echo übersteigen muss, um als Nutzecho erkannt zu werden.

Gemäß einem dritten Verfahren wird dem Füllstandsmessgerät einmalig der aktuelle Füllstand mitgeteilt. Das Füllstandsmessgerät kann anhand des vorgegebenen Füllstandes das zugehörige Echo als Nutzecho identifizieren und z.B. durch einen geeigneten dynamischer Echosuchalgorithmus verfolgen. Derartige Verfahren werden als Echoverfolgung bezeichnet. Dabei werden z.B. in jedem Messzyklus Maxima des Echosignals oder der Echofunktion bestimmt und aufgrund der Kenntnis des im vorangegangenen Messzyklus ermittelten Füllstandes und einer anwendungsspezifischen maximal zu erwartenden Änderungsgeschwindigkeit des Füllstandes das Nutzecho ermittelt. Aus einer Laufzeit des so ermittelten aktuellen Nutzechos ergibt sich dann der neue Füllstand.

Ein viertes Verfahren ist in der DE 102 60 962 A1 beschrieben. Dort wird das Nutzecho anhand von zuvor in einem Speicher abgelegten Daten ermittelt. Dabei werden aus empfangenen Echosignalen Echofunktionen abgeleitet, die die Amplituden der Echosignale in Abhängigkeit von deren Laufzeit wiedergeben. Die Echofunktionen sind in einer Tabelle abgelegt, wobei jede Spalten zur Aufnahme jeweils einer Echofunktion dient. Die Echofunktionen sind in den Spalten in einer Reihenfolge abgelegt, welcher den jeweiligen Echofunktionen zugehörige Füllstand entspricht. Im Betrieb werden das Nutzecho und der zugehörige Füllstand anhand der Echofunktion des aktuellen Sendesignals mit Hilfe der Tabelle bestimmt.

In der DE 103 60 710 A1 ist ein fünftes Verfahren beschrieben, bei dem periodisch Sendesignale in Richtung des Füllgutes gesendet werden, deren Echosignale aufgenommen und in eine Echofunktion umgewandelt werden, mindestens eine Echoeigenschaft der Echofunktion bestimmt wird, und anhand der Echoeigenschaften mindestens einer vorherigen Messung eine Vorhersage für die bei der aktuellen Messung zu erwartenden Echoeigenschaften abgeleitet wird. Es werden die Echoeigenschaften der aktuellen Messung unter Einbeziehung der Vorhersage bestimmt, und anhand der Echoeigenschaften der aktuelle Füllstand ermittelt. Dieses Verfahren kommt im weitesten Sinne einer Echoverfolgung nahe.

In der DE 10 2004 052 110 A1 ist ein sechstes Verfahren beschrieben, das Verbesserung der Nutzechoerkennung durch eine Echobewertung und Klassifizierung der Echos in der Hüllkurve erreicht.

In der Offenlegungsschrift wird ein Verfahren zur Echoverfolgung bei Füllstandsmessung beschrieben, bei dem das Nutz-Echo innerhalb eines Suchfensters verfolgt wird. Die Lage und gegebenenfalls die Breite des Suchfensters passen sich hierbei der entsprechenden Messsituation an. Sofern beispielsweise ein Nutz-Echo bestimmt werden kann, wird die Lage des Suchfensters bei sich änderndem Füllstand nachgeführt. Wird kein Nutz-Echo erkannt, so kann das Suchfenster beispielsweise an eine vordefinierte Stelle zurückgesetzt werden.

Ein Verfahren, bei dem eine Echo-Verfolgung von Nutz-, Stör- und Referenz-Echos mittels mehrer Suchfenster erfolgt, ist in der Veröffentlichungsschrift DE 10 2006 019 191 A1 gezeigt. Durch die Verfolgung dieser Echos in den jeweiligen Suchfenstern kann eine Verschiebung der gesamten Echokurve erkannt werden. Hierdurch lässt sich beispielsweise eine Dejustage des Füllstandsmessgerätes oder eine Änderung der Messbedingungen ermitteln und gegebenenfalls kompensieren.

Die europäische Patentanmeldung EP 2 226 615 A1 beschreibt ein Pulslaufzeit-basiertes Verfahren zur Füllstandsmessung, bei dem in einem ersten Verfahrensschritt zunächst ein Fensterbereich mit der groben Position des Nutz-Echos bestimmt wird. In einem zweiten Verfahrensschritt wird eine exakte Positionsbestimmung des Nutz-Echos innerhalb des Fensters durchgeführt.

In der EP 2 093 546 A1 ist ein Verfahren zur Füllstandsmessung beschrieben, bei dem eine Serie von Sendesignalen nacheinander in Richtung des Mediums gesendet und anhand der zugehörigen Reflexionssignale jeweils eine Echofunktion aufgezeichnet wird, die die Echoamplituden als Funktion der Laufzeit wiedergibt. Diese Echofunktionen werden einer Vorverarbeitung unterzogen, bei der eine Differenz zwischen der jeweiligen Echofunktion und einer vorgegebenen Referenzkurve gebildet wird. Die Referenzkurve wird als Funktion der Laufzeit derart vorgegeben, dass sie oberhalb des Rauschens und vorzugsweise auch oberhalb von in den Echofunktionen enthaltenen Störechos liegt. Indem ausschließlich die Referenzkurve übersteigende Anteile der Echofunktionen zur Füllstandsmessung herangezogen werden, können durch die Referenzkurve abgedeckte, die Füllstandsmessung störende Einflüsse ausgeblendet werden.

Diese oben beschriebenen Verfahren arbeiten für sich genommen jeweils bei einer Vielzahl von Anwendungen einwandfrei. Probleme treten jedoch immer dann auf, wenn das vom Füllstand stammende Echo anhand des Verfahrens nicht zweifelsfrei identifiziert werden kann.

Beim ersten Verfahren treten beispielsweise Messprobleme auf, falls Einbauten im Behälter vorhanden sind, die die Sendesignale besser reflektieren, als die Füllgutoberfläche.

Bei der Echoverfolgung gemäß dem dritten Verfahren treten Messprobleme auf, falls im Betrieb das Nutzecho über ein Störecho läuft und nachfolgend das Störecho als ein falsches Nutzecho weiter verfolgt wird. Desweitern taucht ein Problem auf, falls beim Einschalten, das vorhergehende Nutzechosignal mit dem tatsächlichen nicht mehr übereinstimmt oder das vorhergehende Nutzechosignal nicht bekannt ist.

Zusammenfassend wird bei Füllstandmessgeräten, die auf dem Laufzeit-Messprinzip beruhen, zur Ermittlung des Füllstandes die Rohhüllkurve aufgenommen und die durch Reflexionen an der Füllgutoberfläche und an Störeinbauten, wie beispielsweise Rohre, Rührflügel, Befüllungsströme des Füllguts, Ablagerungen, usw., entstehenden Echos ermittelt. Zur Vereinfachung und zur Verbesserung der Auswertung wird die Rohhüllkurve vorverarbeitet, wodurch eine Reduktion der vorhandenen Maxima und eine Beruhigung der Messung erreicht werden kann. Zu dieser Vorverarbeitung der Echofunktion bzw. der Hüllkurve kommen Filterverfahren bzw. Statistikverfahren zum Einsatz.

Problematisch ist die Anwendung der Filterverfahren, wenn unterschiedliche Verhalten der Filter in den verschiedenen Messsituationen benötigt werden. Falls zufällige Störechos auftreten, ist eine starke Wirkung der Filterverfahren nötig um diese zu unterdrücken.

Diese starke Filterung verursacht jedoch bei sich schnell ändernden Füllständen ein erhebliches Problem wodurch die Bildung von virtuellen Artefaktechos, sogenannte "Geisterechos", hervorgerufen wird. Diese Artefaktechos können nur sehr schwer unterdrückt werden und werden von der Auswertesoftware als mögliches Füllstandecho interpretiert. Aufgrund dieser fehlerhaften Interpretation eines Artefaktechos als Füllstandsecho kann es zu Fehlem bei der Füllstandbestimmung kommen.

Wird versehentlich ein anderes Echo, z. B. ein Störecho, als das Füllstandsecho als Nutzecho des Füllguts im Behälter klassifiziert, besteht die Gefahr, dass ein falscher Füllstand ausgegeben wird. Dies kann je nach Anwendung zu einer Überfüllung von Behältern, zum Leerbetrieb von Pumpen oder anderen zum Teil mit erheblichen Gefahren verbundenen Ereignissen führen.

Der Erfindung liegt die Aufgabe zugrunde, ein verbessertes, sicheres Verfahren zur Ermittlung von Nutzechosignalen in mittels einem Laufzeitmessverfahren ermittelten von Messsignalen aufzuzeigen.

Diese Aufgabe der Erfindung wird durch Verfahren zur Ermittlung und Überwachung des Füllstands eines Mediums in einem Behälter mittels eines Feldgeräts nach einem Laufzeitmessverfahren gelöst, wobei Sendesignale in Richtung des Mediums ausgesendet werden und Reflexionssignale empfangen werden, wobei die empfangenen Reflexionssignalen als Echosignale in einer von der Laufzeit oder der Laufstrecke abhängigen Echofunktion bzw. Hüllkurve erfasst werden, wobei mittels einem Echosuchalgorithmus zumindest ein Nutzechosignal in der Echofunktion bzw. in der Hüllkurve ermittelt wird, wobei mittels zumindest einem Filter mit Filterparametern die Echofunktion bzw. die Hüllkurve vorverarbeitet wird, wobei an der Position des Nutzechosignal in der Echofunktion bzw. in der Hüllkurve zumindest ein erster Filterbereich mit einer ersten Breite vorgegeben wird und somit zumindest drei Filterbereiche in der Echofunktion bzw. der Hüllkurve gebildet werden, wobei sich der zweite Filterbereich und der dritte Filterbereich vor bzw. nach dem ersten Filterbereich an den ersten Filterbereich anschließen.

Hierbei werden die Echofunktion bzw. die Hüllkurve im ersten Filterbereich, im zweiten Filterbereich und/oder im dritten Filterbereich mit unterschiedlichen Filterparametern durch den Filter gefiltert.

Gemäß einer vorteilhaften Ausgestaltung des erfindungsgemäßen Verfahrens wird die Echofunktion bzw. die Hüllkurve im ersten Filterbereich, im zweiten Filterbereich und/oder im dritten Filterbereich einzeln und/oder bereichsweise durch den Filter gefiltert.

Gemäß einer besonderen Ausgestaltung des erfindungsgemäßen Verfahrens wird die Echofunktion bzw. die Hüllkurve mittels eines asymmetrischen Tiefpass-Filters gefiltert.

Alternativ oder zusätzlich ist vorgesehen, dass eine in einem vorhergehenden Messzyklus abgespeicherte Echofunktion bzw. Hüllkurve mit der aktuellen Echofunktion bzw. Hüllkurve gemittelt wird.

Insbesondere wird der Filterbereich mit einer Breite symmetrisch um die Position der Echofunktion bzw. der Hüllkurve vorgegebenen wird.

Gemäß einer alternativen Ausgestaltung des erfindungsgemäßen Verfahrens wird der Filterbereich mit einer Breite asymmetrisch um die Position der Echofunktion bzw. der Hüllkurve vorgegeben.

Gemäß einer ergänzenden Ausgestaltung des erfindungsgemäßen Verfahrens wird zumindest der Filterbereich, dessen Breite adaptiv der sich ändernden Position des Nutzechosignals in der Echofunktion bzw. in der Hüllkurve nachgeführt.

Gemäß einer zusätzlichen Ausgestaltung des erfindungsgemäßen Verfahrens werden die Filterparameter adaptiv der sich ändernden Position des Nutzechosignals in der Echofunktion bzw. in der Hüllkurve angepasst.

Eine vorteilhafte Ausgestaltung des erfindungsgemäßen Verfahrens sieht vor, dass die unterschiedlichen Filterparameter und/oder zumindest die Breite des ersten Filterbereichs durch den Bediener bzw. Wartungspersonal des Feldgeräts vorgegeben werden.

Eine bevorzugte Ausgestaltung des erfindungsgemäßen Verfahrens sieht vor, dass die unterschiedlichen Filterparameter und/oder zumindest die Breite des ersten Filterbereichs durch einen Anpassungsalgorithmus bei Auftreten von Artefaktechos oder zufälligen Störechos automatisch angepasst werden.

Die Vorteile des erfindungsgemäßen Verfahrens zur Ermittlung und Überwachung des Füllstands eines Mediums in einem Behälter nach einem Laufzeitmessverfahren sind,
- dass die Messsicherheit bei schwierigen Anwendungen und Messsituationen und somit die Verfügbarkeit des Messgeräts deutlich gesteigert wird,
- dass die Auswertung des Füllstandes sichtlich beruhigt bzw. verbessert wird, und
- dass eine flexiblere Auswertung durch unterschiedliche Filterbereiche möglich ist.

Weitere Einzelheiten, Merkmale und Vorteile des Gegenstandes der Erfindung ergeben sich aus der nachfolgenden Beschreibung mit den zugehörigen Zeichnungen, in denen bevorzugte Ausführungsbeispiele der Erfindung dargestellt sind. In den Figuren dargestellte Ausführungsbeispiele der Erfindung sind zur besseren Übersicht und zur Vereinfachung die Elemente, die sich in ihrem Aufbau und/oder in ihrer Funktion entsprechen, mit gleichen Bezugszeichen versehen. Es zeigen:
- Fig. 1: ein Ausführungsbeispiel eines Messgeräts mit dem erfindungsgemäßen Verfahren zu Ermittlung des Füllstands mit einer entsprechenden Echofunktion,
- Fig. 2: eine Echofunktion bzw. Hüllkurve mit einem Filter der auf den gesamten Messbereich denselben Filterparameter-Satz anwendet,
- Fig. 3: eine Echofunktionen-Schar bzw. Hüllkurven-Schar mit unterschiedlichen Filterbereichen, die mittels einem Filter der auf alle Filterbereiche denselben Filterparameter-Satz anwendet,
- Fig. 4: eine Echofunktionen-Schar bzw. Hüllkurven-Schar mit unterschiedlichen Filterbereichen, die mittels einem Filter der in den Filterbereichen unterschiedliche Filterparameter-Sätze anwendet, und
- Fig. 5: eine Echofunktion bzw. Hüllkurve mit einem Filter der auf den gesamten Messbereich unterschiedliche Filterparameter-Sätze anwendet.

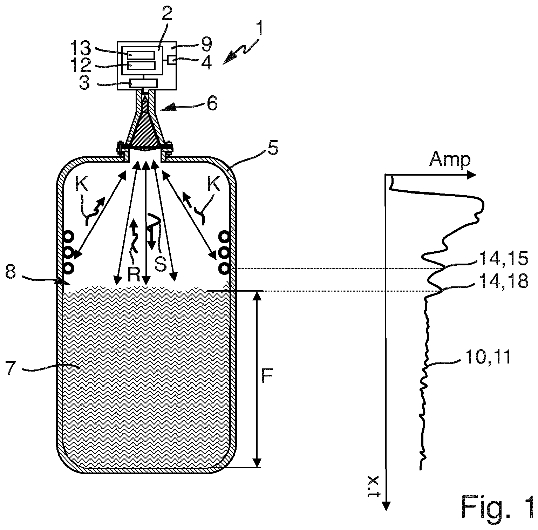

In Fig. 1 ist ein nach dem Laufzeit-Messverfahren arbeitendes Messgerät 1 zur Ermittlung des Füllstand F eines Mediums 7 gezeigt, das auf einem Behälter 5 an einem Stutzen montiert ist. Bei dem gezeigten Messgerät 1 handelt es sich um eine frei in den Prozessraum abstrahlendes Sende-/Empfangselement 6 mit einem Messumformer 9. Der Messumformer 9 weist zumindest eine Sende-/Empfangseinheit 3, die die Erzeugung und den Empfang der Messsignale ausführt, eine Regel-/Auswerteeinheit 4, die zur signaltechnische Verarbeitung der Messsignale und zur Steuerung des Messgeräts 1 befähigt, und außerdem eine Kommunikationseinheit 2, die die Kommunikation über ein Bussystem sowie die Energieversorgung des Messgeräts 1 steuert und regelt, auf. In der Regel-/Auswerteeinheit 4 ist beispielsweise ein Filter 12, zur Vorverarbeitung der Echofunktion 10 bzw. der Hüllkurven 11 und eine Echosuchalgorithmus 13 zur Auswertung der Echofunktion 10 bzw. der Hüllkurven 11 und zur Bestimmung des Nutzechosignals 15 integriert ist. Desweiteren kann in der Regel-/Auswerteinheit 4 ein Speicherelement integriert sein, in dem die Messparameter, Filterparameter FP, und Echoparameter abgelegt sind und in dem Messfaktoren, Filter-Gewichtungsfaktoren und Echofaktoren abgespeichert werden. Das Sende-/Empfangselement 6 ist in diesem Ausführungsbeispiel beispielsweise als eine Hornantenne ausgeführt, jedoch kann als Sende-/Empfangselement 6 jede bekannte Antennenform, wie z.B. Stab- oder Planarantenne ausgestaltet sein. In der Sende-/Empfangseinheit 3 wird ein Messsignal beispielsweise in Form eines hochfrequenten Sendesignals S erzeugt und über das Sende-/Empfangselement 6 in einer vorgegebenen Abstrahlcharakteristik in Richtung Medium 7 abgestrahlt. Nach einer von der zurückgelegten Strecke x abhängigen Laufzeit t werden die an der Grenzfläche 8 des Mediums 7 reflektierten Sendesignale S als Reflexionssignal R wieder von der Sende-/Empfangselement 6 und der Sende-/Empfangseinheit 3 empfangen. Die nachgeschaltete Regel-/Auswerteeinheit 2 ermittelt mittels des Echosuchalgorithmus 13 aus den Reflexionssignalen R eine Echofunktion 10 bzw. Roh-Hüllkurve, die die Amplituden der Echosignale 14 dieser Reflexionssignale R in Abhängigkeit der zurückgelegten Strecke x oder der entsprechenden Laufzeit t darstellt. Durch eine Analog/Digitalwandlung der analogen Echofunktion 10 bzw. der Echokurve 10 wird eine digitalisierte Hüllkurve 11 erzeugt. Im Weiteren wird nur noch der Begriff der Echofunktion 10 verwendet, wobei dieser Begriff ebenfalls die Begriffe der Echokurve 10, der Hüllfunktion bzw. der Hüllkurve 11 impliziert.

Eine die Messsituation im Behälter 5 abbildende Echofunktion 10 ist proportional zur Laufstrecke x des Sendesignals S dargestellt. Zum besseren Verständnis sind Bezugslinien den entsprechenden Echosignalen 18 in der Echofunktion 10 zugeordnet, so dass das Ursache-Wirkungs-Prinzip auf einen Blick erfasst werden kann. Im Anfangsbereich der Echofunktion 10 ist das Abklingverhalten bzw. das so genannten Klingeln zu sehen, das aufgrund von Mehrfachreflexionen oder auch durch Ansatzbildung in dem Sende-/Empfangselement 6 oder dem Stutzen entstehen kann. Das erfindungsgemäße Verfahren ist nicht nur alleine, wie explizit in Fig. 1 dargestellt, in frei abstrahlenden Mikrowellen-Messgeräten 1 umsetzbar, sondern ein Einsatz des erfindungsgemäßen Verfahrens ist in weiteren Laufzeitmesssystemen, wie beispielsweise TDR-Messgeräten oder Ultraschall-Messgeräten ausführbar.

Nach heutigem Stand der Technik gibt es verschiedene Ansätze, die exakte Position x₁ des Nutzechosignal 15 in der ermittelten Echofunktion 10 oder der digitalen Hüllkurve 11 zu bestimmen. Von der exakten Bestimmung der Messposition des Füllstands F in der Echofunktion 10 hängt ab, welche Messgenauigkeit mit diesem Echomessprinzip unter den gegebenen Messbedingungen erreicht werden kann.

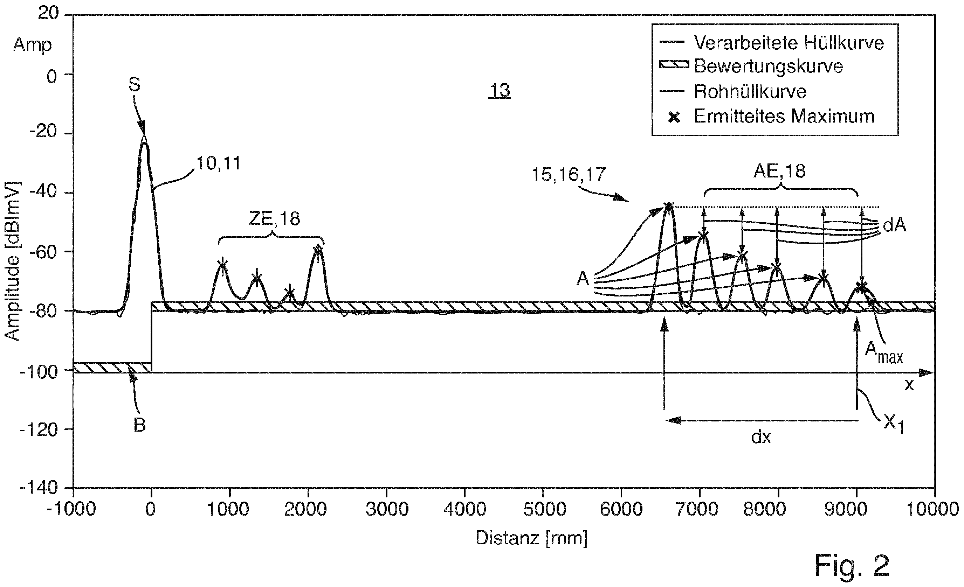

Ein allgemeingültiger Ansatz, den Füllstand aus der Echofunktion 10 bzw. der Hüllkurve 11 zu bestimmen, ist in Fig. 2 gezeigt. In Fig. 2 ist die Echofunktion 10 bzw. die Hüllkurve 11 dargestellt, die mit einem Filter der auf den gesamten Messbereich denselben Filterparameter-Satz anwendet, vorverarbeitet wurde. Auf der Abszissenachse ist die benötigte Laufzeit t oder ggfs. der zurückgelegte Weg x des Messsignals im Behälter 5 aufgetragen, und die Ordinatenachse enthält die Amplitudenwerte Amp der Echofunktion 10 bzw. der Hüllkurve 11. Mittels eines Echosuchalgorithmus 13 wird nach den in der Einleitung beschriebenen Verfahren das Nutzechosignal 15 bestimmt, hierzu wird meist eine Bewertungskurve B als Bezugslinie verwendet.

Die Bewertungskurve B wird beispielsweise mittels eines statischen Echosuchalgorithmus, z.B. eine mathematische Filterfunktion in Form einer gleitenden Mittelwertbildung, aus der jeweiligen Echofunktion 10 oder einer bei der Inbetriebnahme ermittelten Echofunktion 10 im leeren Behälter 5 ermittelt. Diese Bewertungskurve B wird zur Ermittlung der Nutzechosignale 15 in der Echofunktion 10 bzw. der Hüllkurve 11 verwendet. Dementsprechend wird diese Bewertungskurve B als Bezugslinie bzw. Abbruchkriterium für den Echosuchalgorithmus 13 von Nutzechosignalen 15 in der Echofunktion 10 bzw. der Hüllkurve 11 verwendet. Demzufolge ist es möglich, die Nutzechosignale 15 in der Echofunktion 10 mittels der Bewertungskurve B zu identifizieren. Die Signalanteile, die oberhalb der Bewertungskurve B liegen, werden von dem statischen Echosuchalgorithmus 12 als Nutzechosignale 15 erkannt.

Um nun eine stabile Auswertung durch den Echosuchalgorithmus 13 zu ermöglichen, wird die Echofunktion 10 bzw. die Hüllkurve 11 vorverarbeitet. Aufgrund dieser Vorverarbeitung kann eine Reduktion der vorhandenen Störechosignale 18 und eine Beruhigung der gesamten Messung durch den Echosuchalgorithmus 13 erreicht werden. Hierzu wird ein asymmetrisches Statistikverfahren bzw. ein asymmetrisches Filterverfahren, indem zumindest zwei in verschiedenen Messzyklen ermittelte Echofunktionen 10 bzw. Hüllkurven 11 gemittelt werden. So können zufällig Echosignale ZE unterdrückt werden. Auch ein kurzfristiges Einbrechen der Echoamplituden A, Amax kann durch das asymmetrische Statistikverfahren bzw. asymmetrischen Filterverfahren ausgeglichen werden.

Die Echofunktion 10 bzw. der Hüllkurve 11 weist aufgrund der sehr starken, über den gesamten Messbereich einheitlichen Filterung durch den Filter 12 einige Störechosignale 18 auf. Problematisch ist die Anwendung der asymmetrischen Statistik, wenn unterschiedliche Filter-Verhalten benötigt werden. Falls zufällige Störechosignale ZE auftreten, ist eine starke Wirkung der Statistik bzw. Filterung notwendig, damit diese zufälligen Echosignale ZE unterdrückt werden. Wiederum verursacht diese starke Wirkung der Filterung bzw. Statistik bei sich schnell ändernden Füllständen F des Mediums 7 im Behälter 5 ein erhebliches Messproblem, da virtuelle Artefaktechos AE, sogenannte "Geisterechos", erzeugt werden. Aufgrund dieser Artefaktechosignalen AE kann der Echosuchalgorithmus 13 fälschlicherweise ein solches Artefaktechosignal AE als Nutzechosignal 15 identifizieren und somit ein falscher Messwert für den Füllstand F ermitteln. Zusammenfassend lässt sich sagen, dass sobald sich der Füllstand F des Mediums 7 im Behälter 5 schnell bewegt, ist eine starke Wirkung der Filterung bzw. der Statistik unerwünscht In Fig. 2 sind die Artefaktechos AE gezeigt, welche bei einer schnellen Positionsänderung dx des Nutzechosignals 15 aufgrund der schnellen Änderung des Füllstands F von 9000 mm nach 6700 mm entstehen können. Diese Artefaktechos AE entstehen durch die Zeitverzögerung in dem Statistikverfahren bzw. Filterverfahren.

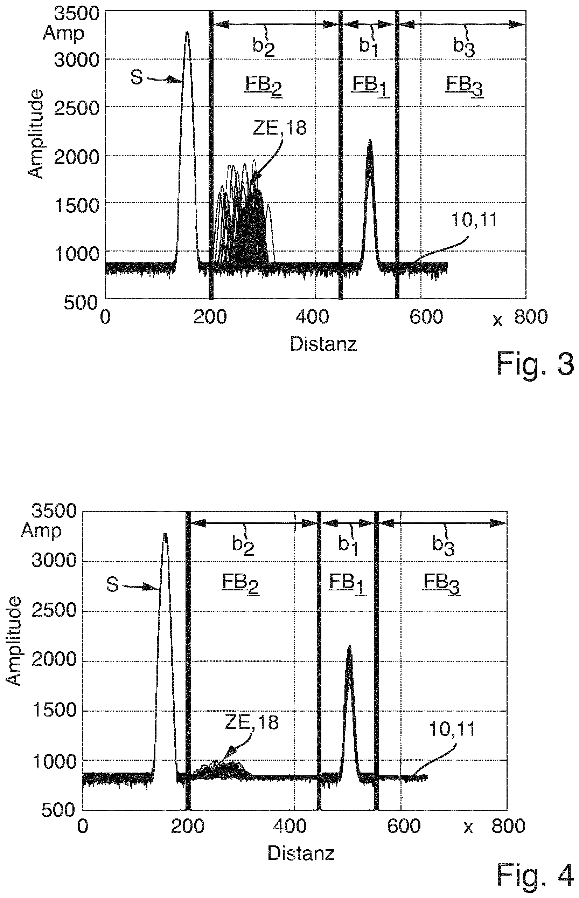

Erfindungsgemäß wird ein bereichsweises Filterverfahren bzw. Statistikverfahren zur Vorverarbeitung der Echofunktion 10 bzw. der Hüllkurve 11 eingesetzt. Hierzu wird, wie in Fig. 3 gezeigt, die Echofunktion 10 bzw. die Hüllkurve 11 in zumindest drei Filterbereiche FB₁, FB₂, FB₃ eingeteilt, indem an der Position x₁ des im vorhergehenden Messzyklus ermittelten Nutzechosignal 15 ein erster Filterbereich FB₁ mit einer ersten Fensterbreite b₁ vorgegeben wird. Durch diese Vorgabe des ersten Filterbereichs FB₁ um die Position x₁ des Nutzechosignals 15 schließen sich der zweite Filterbereich FB₂ mit einer zweiten Breite b₂ in Richtung des Sendesignals S und der dritte Filterbereich FB₃ mit einer dritten Breite b₃ implizit an. In Fig. 3 ist die Kurvenschar der Echofunktion 10 bzw. der Hüllkurve 11 der verschieden Messzyklen über die gemittelt wird gezeigt. Es sind die verschiedenen Störechosignale 18 als zufällige Echosignale ZE gezeigt. Der zweite Filterbereich FB₂ ist symmetrisch oder asymmetrisch um die Position x₁ des Nutzechosignals 15 aus einem vorhergehenden Messzyklus mit einer zweiten Breite b₂ ausgebildet. Die zweiten Breite b₂ des zweite Filterbereich FB₂ wird adaptiv der sich ändernden Position des Nutzechosignals in der Echofunktion 10 bzw. in der Hüllkurve 11 nachgeführt. Desweitern können die unterschiedlichen Filterparameter FP und/oder zumindest die Breite b₁ des ersten Filterbereichs FB₁ durch einen Anpassungsalgorithmus bei Auftreten von Artefaktechos AE oder zufälligen Störechos ZE automatisch angepasst werden, so dass das Filterverfahren bzw. Statistikverfahren sich automatisch anpasst und selbstlernend ist. Die Filterparameter FP können adaptiv an die sich ändernden Position x1 des Nutzechosignals 15 in der Echofunktion 10 bzw. in der Hüllkurve 11 angepasst werden. Hierzu können in der Speichereinheit der Regel-/Auswerteeinheit 2 entsprechende Sätze von Filterparameter FP abgelegt sein, die nach entsprechenden Kriterien, wie zum Beispiel die Position x₁ des Nutzechosignals 15, geladen werden. Alternativ oder ergänzenden können die unterschiedlichen Filterparameter FP und/oder zumindest die Breite b₁ des ersten Filterbereichs FB₁ durch den Bediener bzw. Wartungspersonal des Feldgeräts 1 vorgegeben werden.

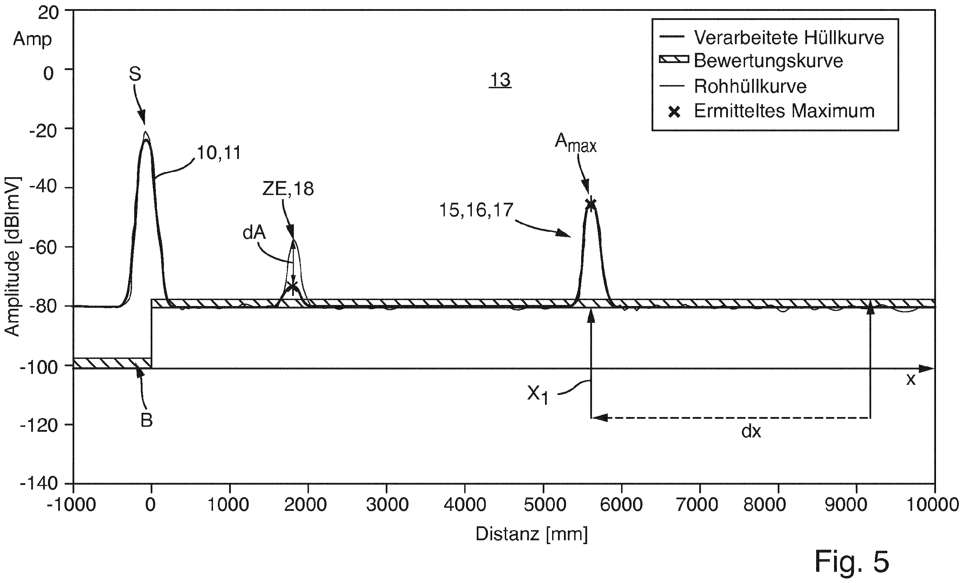

Aufgrund dieser Dreiteilung des Messbereichs in zumindest drei Filterbereiche der Echofunktion 10 bzw. der Hüllkurve 11 können für die die einzelnen Filterbereiche FB₁, FB₂, FB₃ verschieden Filterparameter FP bzw. Filterkriterien angewandt werden. Diese unterschiedliche Filterung bzw. Mittelung in den drei Filterbereichen FB₁, FB₂, FB₃ ist in Fig. 4 gezeigt. In Fig. 4 und Fig. 5 ist ersichtlich, dass durch diese unterschiedliche Filterung bzw. Statistik in diesen Filterbereichen FB₁, FB₂, FB₃ die Unterdrückung der zufälligen Störechos im zweiten Filterbereich FB₂ mittels einer starken Filterung und die Verhinderung der Artefaktechosignale AE im dritten Filterbereich FB3 mittels einer geringen Filterung erreicht wird. Aufgrund der Einteilung der Echofunktion 10 bzw. der Hüllkurve 11 in Filterbereiche FB₁, FB₂, FB₃ und die damit verbundene Möglichkeit verschiedene Abschnitte der der Echofunktion 10 bzw. der Hüllkurve 11 mit unterschiedlichen Filterparametern FP bzw. Statistikparametern zu beaufschlagen, ist es möglich den bewegten Füllstand F ohne Bildung von Artefaktechos AE zu ermitteln. Ungeachtet der zufällig auftretenden Störechos ZE, die ebenfalls mittels einer starken Filterung unterdrückt werden können. Auch ein kurzfristiges Einbrechen der Echoamplitude Amax des Nutzechosignals 15 kann durch dieses asymmetrische Statistikverfahren bzw. Filterverfahren ausgeglichen werden.

In der erfindungsgemäßen Hüllkurvenstatistik werden in folgenden Messzyklen die Echofunktionen 10 bzw. die Hüllkurven 11 punktweise zeitlich gemittelt. Diese Mittelung erfolgt durch einen Filter 12 mit exponentiellen Gewichtungsfaktoren. Dadurch werden positive und negative Signalbeiträge unterschiedlich gewichtet, je nachdem ob der Wert der Hüllkurven 11 der letzten Messung größer oder kleiner als der entsprechende Wert der aktuellen Hüllkurven 11 ist, werden unterschiedliche Gewichtungsparameter verwendet. Dieses Verfahren wird "asymmetrische Hüllkurvenstatistik" oder asymmetrisches Filterverfahren genannt. Die Mittelung wird beispielsweise durch einen Tiefpass-Filter 12 mit entsprechenden Filterparametern FP durchgeführt. Aufgrund dieser Mittelung bzw. Filterung wird eine Reduktion der Anzahl der Echos und eine Verbesserung des Signal-Rausch-Abstandes erreicht. Ferner werden Schwankungen der Echoamplitude A ausgeglichen. Das Mittelungsergebnis wird im Speicherelement in der Regel-/Auswerteeinheit 2 als ein Parameter gespeichert. Bei der asymmetrischen Hüllkurvenstatistik werden bei der Mittelwertberechnung durch den Filter in der Zeit steigende und fallende. Hüllkurvenwerte 11 unterschiedlich gewichtet, so dass für jeden Hüllkurven-Punkt 11 ein entsprechender Gewichtungsfaktor vorliegt. Diese Gewichtungsfaktoren können in dem Speicherelement in der Regel-/Auswerteinheit 2 abgelegt sein. Die Auswahl von kleinerem Gewichtungsfaktoren für fallende Werte der Hüllkurve 11 erlaubt die Echoamplitude A hoch zu halten und Schwankungen in den Echoamplituden A auszugleichen

In Fig. 5 ist eine solche Echofunktion 10 bzw. Hüllkurve 11 mit einem Filter 12 der auf den gesamten Messbereich bzw. Filterbereich FB₁, FB₂, FB₃ unterschiedliche Filterparameter-Sätze FP anwendet, gezeigt. In Fig. 5 ist auch eine schnelle Positionsänderung dx des Nutzechosignals 16 aufgrund Änderung des Füllstands F im Behälter 5 gezeigt, jedoch werden durch die geringere Filterung der Echofunktion 10 bzw. der Hüllkurve 11 im ersten Filterbereich FB₁ die Entstehung von Artefaktechos AE verhindert. Vergleicht man die Echofunktionen 10 bzw. die Hüllkurven 11 der Fig. 2 mit der Fig. 5 sind die die Vorteile der erfindungsgemäßen bereichsweisen Filterung bzw. Mittelung mittels einem asymmetrischem Filterverfahren bzw. mittels eines asymmetrischen Statistikverfahrens leicht ersichtlich. Die Störechosignale 18 aus zufälligen Echosignalen ZE und Artefaktechos AE werden durch das erfindungsgemäße Verfahren verhindert.

### Bezugszeichenliste

- 1: Feldgerät, Messgerät
- 2: Regel-/Auswerteeinheit
- 3: Sende-/Empfangseinheit
- 4: Kommunikationseinheit
- 5: Behälter
- 6: Sende-/Empfangselement
- 7: Medium
- 8: Grenzschicht, Oberfläche
- 9: Messumformer
- 10: Echofunktion, Echokurve
- 11: Hüllfunktion, Hüllkurve
- 12: Filter
- 13: Echosuchalgorithmus
- 14: Echosignal
- 15: Nutzechosignal
- 16: maximales Echosignal
- 17: erste Echosignal
- 18: Störechosignal

- FP: Filterparameter
- FB₁: erster Filterbereich
- FB₂: zweiter Filterbereich
- FB₃: dritter Filterbereich
- b₁: erste Breite
- b₂: zweite Breite
- b₃: dritte Breite

- Amp: Amplitudenwert
- A: Amplitude
- Aₘₐₓ: maximaler Amplitude
- dA: Amplitudenänderung
- S: Sendesignal
- R: Reflexionssignal
- K: Störsignal
- AE: Artefaktechos, Geisterechos
- ZE: zufällige Störechos
- x: Weg, Laufweg
- x₁: Position
- dx: Positionsänderung
- t: Zeit, Laufzeit
- F: Füllstand
- B: Bewertungskurve

## Patentansprüche

1. Verfahren zur Ermittlung und Überwachung des Füllstands (F) eines Mediums (7) in einem Behälter (5) mittels eines Feldgeräts (1) nach einem Laufzeitmessverfahren,
- wobei Sendesignale (S) in Richtung des Mediums (7) ausgesendet werden und Reflexionssignale (R) empfangen werden,
- wobei die empfangenen Reflexionssignalen (R) als Echosignale (14) in einer von der Laufzeit (t) oder der Laufstrecke (x) abhängigen Echofunktion (10) bzw. Hüllkurve (11) erfasst werden,
- wobei mittels einem Echosuchalgorithmus (13) zumindest ein Nutzechosignal (15) in der Echofunktion (10) bzw. in der Hüllkurve (11) ermittelt wird,
- wobei mittels zumindest einem Filter (12) mit Filterparametern (FP) die Echofunktion (10) bzw. die Hüllkurve (11) vorverarbeitet wird,
**dadurch gekennzeichnet,**
- **dass** an der Position (x₁) des Nutzechosignals (15) in der Echofunktion (10) bzw. in der Hüllkurve (11) zumindest ein erster Filterbereich (FB₁) mit einer ersten Breite (b₁) vorgegeben wird und somit zumindest drei Filterbereiche (FB₁, FB₂, FB₃) in der Echofunktion (10) bzw. der Hüllkurve (11) gebildet werden, wobei sich der zweite Filterbereich (FB₂) und der dritte Filterbereich (FB₃) vor bzw. nach dem ersten Filterbereich (FB₁) an den ersten Filterbereich (FB₁) anschließen, und
- wobei die Echofunktion (10) bzw. die Hüllkurve (11) im ersten Filterbereich (FB₁), im zweiten Filterbereich (FB₂) und/oder im dritten Filterbereich (FB₃) mit unterschiedlichen Filterparametern (FP) durch den Filter (12) gefiltert wird.

2. Verfahren nach Anspruch 1,
**dadurch gekennzeichnet,**
**dass** die Echofunktion (10) bzw. die Hüllkurve (11) im ersten Filterbereich (FB₁), im zweiten Filterbereich (FB₂) und/oder im dritten Filterbereich (FB₃) einzeln und/oder bereichsweise durch den Filter (12) gefiltert wird.

3. Verfahren nach Anspruch 1 oder 2,
**dadurch gekennzeichnet,**
**dass** die Echofunktion (10) bzw. die Hüllkurve (11) mittels eines asymmetrischen TiefpaßFilter (12) gefiltert wird.

4. Verfahren nach zumindest einem der vorhergehenden Ansprüche,
**dadurch gekennzeichnet,**
**dass** eine in einem vorhergehenden Messzyklus abgespeicherte Echofunktion (10) bzw. Hüllkurve (11) mit der aktuellen Echofunktion (10) bzw. Hüllkurve (11) gemittelt wird.

5. Verfahren nach zumindest einem der vorhergehenden Ansprüche,
**dadurch gekennzeichnet,**
**dass** der Filterbereich (FB₁) mit einer Breite (b₁) symmetrisch um die Position (x₁) der Echofunktion (10) bzw. der Hüllkurve (11) vorgegebenen wird.

6. Verfahren nach zumindest einem der Ansprüche 1 bis 5,
**dadurch gekennzeichnet,**
**dass** der Filterbereich (FB₁) mit einer Breite (b₁) asymmetrisch um die Position (x₁) der Echofunktion (10) bzw. der Hüllkurve (11) vorgegeben wird.

7. Verfahren nach zumindest einem der vorhergehenden Ansprüche,
**dadurch gekennzeichnet,**
**dass** zumindest der Filterbereich (FB₁), dessen Breite (b₁) adaptiv der sich ändernden Position (x₁) des Nutzechosignals (15) in der Echofunktion (10) bzw. in der Hüllkurve (11) nachgeführt wird.

8. Verfahren nach zumindest einem der vorhergehenden Ansprüche,
**dadurch gekennzeichnet,**
**dass** die Filterparameter (FP) adaptiv der sich ändernden Position (x₁) des Nutzechosignals (15) in der Echofunktion (10) bzw. in der Hüllkurve (11) angepasst werden.

9. Verfahren nach zumindest einem der vorhergehenden Ansprüche,
**dadurch gekennzeichnet,**
**dass** die unterschiedlichen Filterparameter (FP) und/oder zumindest die Breite (b₁) des ersten Filterbereichs (FB₁) durch den Bediener bzw. Wartungspersonal des Feldgeräts (1) vorgegeben werden.

10. Verfahren nach zumindest einem der vorhergehenden Ansprüche,
**dadurch gekennzeichnet,**
**dass** die unterschiedlichen Filterparameter (FP) und/oder zumindest die Breite (b₁) des ersten Filterbereichs (FB₁) durch einen Anpassungsalgorithmus bei Auftreten von Artefaktechos (AE) oder zufälligen Störechos (ZE) automatisch angepasst werden.

## Claims

1. Procedure to determine and monitor a level (F) of a medium (7) in a vessel (5) using a field device (1) according to the time-of-flight method,
- wherein transmission signals (S) are transmitted in the direction of the medium (7) and reflection signals (R) are received,
- wherein the received reflection signals (R) are recorded as echo signals (14) in an echo function (10) or envelope curve (11) that depends on the transit time (t) or the distance (x),
- wherein at least a wanted echo signal (15) is determined in the echo function (10) or envelope curve (11) using an echo search algorithm (13),
- wherein the echo function (10) or the envelope curve (11) is preprocessed using at least a filter (12) with filter parameters (FP),
**characterized in that,**
at least a first filter zone (FB₁) with a first width (b₁) is predefined at the position (x₁) of the wanted echo signal (15) in the echo function (10) or in the envelope curve (11) and, consequently, at least three filter zones (FB₁, FB₂, FB₃) are formed in the echo function (10) or in the envelope curve (11), wherein the second filter zone (FB₂) and the third filter zone (FB₃) before and after the first filter zone (FB₁), respectively, are adjacent to the first filter zone (FB₁), and
- wherein the echo function (10) or the envelope curve (11) is filtered by the filter (12) in the first filter zone (FB₁), in the second filter zone (FB₂) and/or in the third filter zone (FB₃) using different filter parameters.

2. Procedure as claimed in Claim 1,
**characterized in that**
the echo function (10) or the envelope curve (11) is filtered individually and/or zone by zone by the filter (12) in the first filter zone (FB₁), in the second filter zone (FB₂) and/or in the third filter zone (FB₃).

3. Procedure as claimed in Claim 1 or 2,
**characterized in that**
the echo function (10) or the envelope curve (11) is filtered by an asymmetrical low-pass filter.

4. Procedure as claimed in at least one of the previous claims,
**characterized in that**
an echo function (10) or an envelope curve (11) saved in a previous measuring cycle is averaged with the current echo function (10) or envelope curve (11).

5. Procedure as claimed in at least one of the previous claims,
**characterized in that**
the filter zone (FB₁) with a width (b₁) is predefined in a symmetric manner around the position (X₁) of the echo function (10) or the envelope curve (11).

6. Procedure as claimed in at least one of the Claims 1 to 5,
**characterized in that**
the filter zone (FB₁) with a width (b₁) is predefined in an asymmetric manner around the position (X₁) of the echo function (10) or the envelope curve (11).

7. Procedure as claimed in at least one of the previous claims,
**characterized in that**
at least the filter zone (FB₁) and its width (b₁) are adapted to the changing position (x₁) of the wanted echo signal (15) in the echo function (10) or in the envelope curve (11).

8. Procedure as claimed in at least one of the previous claims,
**characterized in that**
the filter parameters (FP) are adapted to the changing position (x₁) of the wanted echo signal (15) in the echo function (10) or in the envelope curve (11).

9. Procedure as claimed in at least one of the previous claims,
**characterized in that**
the different filter parameters (FP) and/or at least the width (b₁) of the first filter zone (FB₁) are predefined by the operator or the maintenance personnel of the field device (1).

10. Procedure as claimed in at least one of the previous claims,
**characterized in that**
the different filter parameters (FP) and/or at least the width (b₁) of the first filter zone (FB₁) are automatically adapted by an adaptation algorithm in the event of false echoes (AE) or random interference echoes (ZE).

## Revendications

1. Procédé destiné à la détermination et à la surveillance du niveau (F) d'un produit (7) dans un réservoir (5) au moyen d'un appareil de terrain (1) selon une méthode de mesure du temps de propagation,
- des signaux d'émission (S) étant émis en direction du produit (7) et des signaux de réflexion (R) étant reçus,
- les signaux de réflexion (R) reçus étant saisis en tant que signaux d'écho (14) dans une fonction d'écho (10) ou une courbe enveloppe dépendant du temps de propagation (t) ou de la distance (x),
- au moins un signal d'écho utile (15) étant déterminé dans la fonction d'écho (10) ou dans la courbe enveloppe (11) au moyen d'un algorithme de recherche d'écho (13),
- la fonction d'écho (10) ou la courbe enveloppe (11) étant prétraitée au moyen d'au moins un filtre (12) avec des paramètres de filtre (FP),
**caractérisé en ce que**,
sur la position (x₁) du signal d'écho utile (15) dans la fonction d'écho (10) ou dans la courbe enveloppe (11) est prédéfinie une première zone de filtre (FB₁) avec une première largeur (b₁) et, par conséquent, au moins trois zones de filtre (FB₁, FB₂, FB₃) étant ainsi constituées dans la fonction d'écho (10) ou dans la courbe enveloppe (11), la deuxième zone de filtre (FB₂) et la troisième zone de filtre (FB₃) étant attenantes, avant ou après la première zone de filtre (FB₁), à la première zone de filtre (FB₁), et
- la fonction d'écho (10) ou la courbe enveloppe (11) étant filtrée par le filtre (12), avec des paramètres différents dans la première zone de filtre (FB₁), dans la deuxième zone de filtre (FB₂) et/ou dans la troisième zone de filtre (FB₃).

2. Procédé selon la revendication 1,
**caractérisé**
**en ce que** la fonction d'écho (10) ou la courbe enveloppe (11) sont filtrées, dans la première zone de filtre (FB₁), dans la deuxième zone de filtre (FB₂) et/ou dans la troisième zone de filtre (FB₃), individuellement et/ou zone par zone par le filtre (12).

3. Procédé selon la revendication 1 ou 2,
**caractérisé**
**en ce que** la fonction d'écho (10) ou la courbe enveloppe (11) est filtrée au moyen d'un filtre passe-bas asymétrique.

4. Procédé selon au moins l'une des revendications précédentes,
**caractérisé**
**en ce qu'**est établie une moyenne entre une fonction d'écho (10) ou une courbe enveloppe (11) mémorisée dans un cycle de mesure précédent et la fonction d'écho (10) ou la courbe enveloppe (11) actuelle.

5. Procédé selon au moins l'une des revendications précédentes,
**caractérisé**
**en ce que** la zone de filtre (FB₁) avec une largeur (b₁) est prédéfinie de façon symétrique autour de la position (X₁) de la fonction d'écho (10) ou de la courbe enveloppe (11).

6. Procédé selon au moins l'une des revendications 1 à 5,
**caractérisé**
**en ce que** la zone de filtre (FB₁) avec une largeur (b₁) est prédéfinie de façon asymétrique autour de la position (X₁) de la fonction d'écho (10) ou de la courbe enveloppe (11).

7. Procédé selon au moins l'une des revendications précédentes,
**caractérisé**
**en ce qu'**au moins la zone de filtre (FB₁), sa largeur (b₁) sont adaptés à la position (x₁) changeante du signal d'écho utile (15) dans la fonction d'écho (10) ou dans la courbe enveloppe (11).

8. Procédé selon au moins l'une des revendications précédentes,
**caractérisé**
**en ce que** les paramètres de filtre (FP) sont adaptés à la position (x₁) changeante du signal d'écho utile (15) dans la fonction d'écho (10) ou dans la courbe enveloppe (11).

9. Procédé selon au moins l'une des revendications précédentes,
**caractérisé**
**en ce que** les différents paramètres de filtre (FP) et/ou au moins la largeur (b₁) de la première zone de filtre (FB₁) sont prédéfinis par l'utilisateur ou le personnel de maintenance de l'appareil de terrain (1).

10. Procédé selon au moins l'une des revendications précédentes,
**caractérisé**
**en ce que** les différents paramètres de filtre (FP) et/ou au moins la largeur (b₁) de la première zone de filtre (FB₁) sont adaptés automatiquement par un algorithme d'adaptation en cas d'apparition d'un écho parasite (AE) ou d'échos parasites aléatoires (ZE).
